# EUROPEAN PATENT SPECIFICATION

(11) **EP 4 063 812 B1**
(45) Date of publication and mention of the grant of the patent: **06.05.2026**
(21) Application number: 22164189.7
(22) Date of filing: 24.03.2022
(51) Int. Cl.: G01K 1/14, G01K 1/16, G01K 7/18, G01K 7/22, B60L 53/16, H01R 13/66

(54) **TEMPERATURE SENSOR INTEGRATION TO MONITOR OVER-HEATING OF TERMINALS**
INTEGRATION VON TEMPERATURSENSOREN ZUR ÜBERWACHUNG DER ÜBERHITZUNG VON ENDGERÄTEN
INTÉGRATION D'UN CAPTEUR DE TEMPÉRATURE POUR SURVEILLER LA SURCHAUFFE DE TERMINAUX

(30) Priority: 26.03.2021 FR 2103062; 06.05.2021 FR 2104816
(43) Date of publication of application: 28.09.2022
(73) Proprietor: Aptiv Technologies AG, 8200 Schaffhausen (CH)
(72) Inventor: GUILLANTON, Erwan, 28230 EPERNON (FR); MENARD, Pascal, 78450 Villepreux (FR)
(74) Representative: INNOV-GROUP

(56) References cited:
- EP-A1- 3 399 602
- CN-U- 208 171 458
- US-A1- 2018 159 280

## Description

### TECHNICAL FIELD

The present disclosure relates to an electrical terminal assembly intended for use in a vehicle, such as an electric vehicle or hybrid electric vehicle.

### BACKGROUND

The document CN208171458U discloses a temperature sensor heat conduction subassembly and a connector.

In order to charge an electric battery mounted in a vehicle such as an electric vehicle, hybrid electric vehicle, etc., the vehicle is provided with a charging inlet device. During an electric charging operation of the battery, a charging connector (or charging outlet device) of a charging station is mated with the charging inlet device of the vehicle and high charging currents are transmitted. This may result in a high thermal power dissipation in the charging inlet device or in the charging connector. For safety reasons, it is required to monitor the temperature of the charging inlet device and/or the charging connector in order to detect any overheating. In case that an important rise of temperature is detected, the charging current can be reduced or even switched off.

Further, for temperature control, conventional solutions use temperature sensors that monitor temperature around potential heating points like terminals connections, for potential current limitation. Prior art sensors are thermal / temperature sensors near the heating point or attached to insulation wires (but with less thermal effectiveness) or overmolding sensors covered by high conductivity thermal conductivity gap filler, that allows direct contact with overmolded thermal sensor.

An important drawback is that conventional solutions may require overmolded terminals, which is not easy for some terminal shapes. Other conventional solutions take advantage of block seal presence to insert temperature sensors inside, but still require some gap filler, as adhesion between thermal sensor and block seal is not efficient. However, simply removing overmolding around the high voltage terminals is not efficient as there is a risk to have thermal gap filler that unsticks from these terminals and create defects due to thermal insulation of air layer. This risk increases with strong vibrations environment, or when screwing process of terminals creates strains on terminal connection with gap filler. In that case reliability of information send by thermal sensor is affected.

Still further, the document WO 2020/039344 A1 discloses an electrical connector including a housing having a terminal channel with a power terminal in the terminal channel, and a temperature sensor assembly. The temperature sensor assembly includes a sealing pad holding the power terminal and a thermal shunt held by the sealing pad. The sealing pad is electrically insulative to electrically isolate the temperature sensor assembly from the power terminal, and thermally conductive. It is thermally coupled to the power terminal and to the thermal shunt. The terminal shunt is in contact with a thermal sensor. The thermal sensor monitors the temperature of the power terminal via a thermal path defined by the sealing pad and the thermal shunt. The thermal shunt is a solid body, separate and discrete from the sealing pad. It is manufactured separately from a highly thermally conductive material such as an aluminum oxide material, aluminum nitride, mullite, a thermally conductive plastic, a metal material (e.g., copper or aluminum), or a ceramic material.

The electrical connector disclosed in WO 2020/039344 A1 has several drawbacks. A first drawback is that the temperature sensor assembly is rather complicated to manufacture because the thermal shunt is a body separate and discrete from the sealing pad, that must be manufactured separately and then coupled to the sealing pad and arranged against the thermal sensor. A second drawback is that the thermal path between the power terminal and the thermal sensor includes a solid body to solid body connection between the temperature sensor and the thermal shunt. The thermal shunt only touches a top surface of the thermal sensor. As a result, the thermal contact between the thermal sensor and the shunt is limited. A third drawback is that there may be a risk to damage the thermal sensor by vibration, because the thermal shunt has its own mass that can vibrate during car driving. In particular, this may cause micro cracks of the sensor's solder joints to the printed circuit board in the long run.

Therefore, there is a need for another kind of thermal path between the power terminal and the thermal sensor that is a good trade-off for overcoming the different drawbacks of the prior art.

### SUMMARY

According to the invention, there is provided a terminal assembly as defined in claim 1.

This allows to provide a good thermal path to the temperature sensor while being compatible with high vibrations levels and easy to manufacture. This allows to monitor in an efficient manner the temperature at the terminal. Also this allows to keep the good distance between the terminals (e.g. about 15 mm) which is important in particular for standard manufacturing.

According to the invention as claimed, the compressing mechanism is further arranged to compress the flexible thermally conductive component onto the terminal.

This allows to connect the temperature sensor, with high thermal conductivity component to the terminals, such as high voltage terminals. The flexible thermally conductive component is squeezed onto the terminal (or terminal housing header) to monitor the terminal temperature. The flexible thermally conductive component is also dedicated to transfer heat from the terminal to the temperature sensor. The high flexibility of the flexible thermally conductive component allows to maintain contact with the terminal, even in case of displacements due to vibrations or process conditions. The flexible thermally conductive component compression allows also strong stability to perform high vibrations resistance, for connection mated inside. The compression provides also good thermal contact with temperature sensor without need of gap filler.

Further advantages of this solution are that the terminal assembly of the present disclosure can be implemented with classic assembly (component locked with latches, no gap filler, no over molding) between several ways of terminals and with only one temperature sensor to monitor temperature of several lines / terminals. The terminal assembly of the present disclosure is compliant with terminals displacements, in particular for high voltage (vibrations, temperature cycles), thanks to flexible thermally conductive component elasticity after compression, that can support permanent strain, without risk of flowing. It allows to lower the cost of manufacturing with only molded components with classical mechanical assembly (no overmolding, no gap filler to use for assembly).

Advantageously, the flexible thermally conductive component is a liquid silicone rubber (LSR).

This allows to provide a suitable flexible thermally conductive component which has good properties in cooperation with the temperature sensor, including good compression properties and good thermal properties, able to resist to vibration and temperature cycles. This is a good compromise between material softness and thermal conductivity.

Advantageously, the temperature sensor is embedded in the flexible thermally conductive component.

Advantageously, the terminal assembly further has a printed circuit board connected to the temperature sensor.

This allows to retrieve the temperature signal to the printed circuit board and allows to communicate with other components of the vehicle.

Advantageously, the compressing mechanism has a plunger part arranged for being latched in a supporting body of the compressing mechanism.

Advantageously, the plunger part has a slope arranged to be introduced in the supporting body and an abutting portion arranged to be engaged with the supporting body.

Advantageously, the supporting body has a fixing portion arranged to be fixed to an anchoring portion of the terminal.

This allows to a provide good mechanical attachment and a good mechanical compression of the flexible thermally conductive component.

This compressing mechanism compresses the flexible thermally conductive component against the temperature sensor, which may be embedded therein. The compression of the flexible thermally conductive component gives also more pressure on terminal (or on terminal blade) to guarantee permanent contact whatever environmental conditions can occur. Housing insulation walls of the terminal assembly provide enough geometry to respect condition of creepage distance above 15mm, between high voltage terminals and between high voltage terminals to low voltage pins inside the pack header.

Advantageously, the temperature sensor is selected from the group of a negative temperature coefficient sensor, a positive temperature coefficient sensor or a resistance temperature detector.

This allows to select a convenient temperature sensor.

Advantageously, the thermal sensor system has no gap filler in contact with the temperature sensor.

This allows to improve the thermal conductivity, to lower the cost and to increase the vibration resistance.

Advantageously, the temperature sensor is embedded in the flexible thermally conductive component.

This allows to provide a good compression in synergy with the compressing mechanism.

Advantageously, the terminal assembly has at least two terminals, and the thermal sensor system is arranged between the two terminals.

This allows to provide a convenient terminal assembly with a reduced number of thermal sensor for a set.

Advantageously, the flexible thermally conductive component is compressed between the two terminals.

This allows to provide a good vibration resistance and a good thermal behavior.

In some embodiments, the terminal assembly includes a number N of terminals (or power terminals, and corresponding terminal housing headers) with N>1 (such as 3 or more) and a number M of temperature sensors with 1≤M≤N.

### BRIEF DESCRIPTION OF THE DRAWINGS

Other features, purposes and advantages of the disclosure will become more explicit by means of reading the detailed statement of the nonrestrictive embodiments made with reference to the accompanying drawings
[fig. 1] illustrates a terminal assembly according to an embodiment of the present disclosure (top view),
[fig. 2] illustrates a detailed view of the terminal assembly according to an embodiment of the present disclosure (bottom view),
[fig. 3] illustrates another detailed view of the terminal assembly according to an embodiment of the present disclosure (cross section view),
[fig.4] illustrates a second embodiment of the present disclosure (top view in perspective)
[fig. 5] illustrates the second embodiment (partial first cross section view),
[fig. 6] illustrates the second embodiment (partial second cross section view),
[fig. 7] illustrates the second embodiment (partial third cross section view),

### DETAILED DESCRIPTION

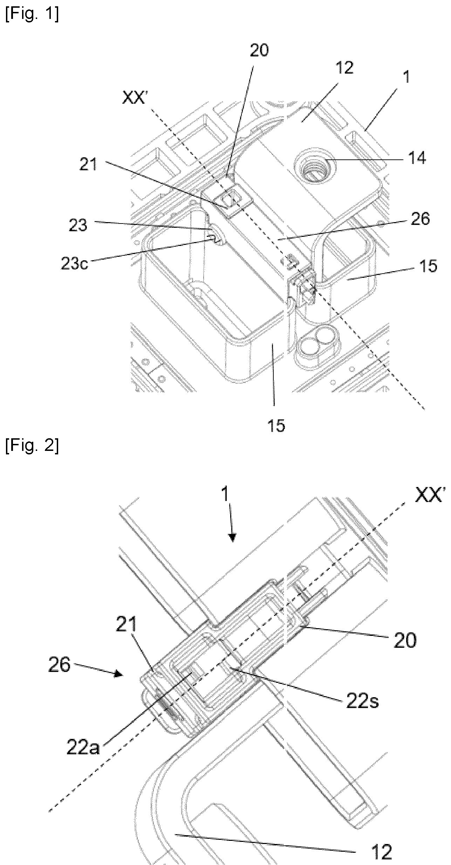

The terminal assembly 1 is represented seen from the top, in figure 1.

The present disclosure concerns a terminal assembly 1 having two terminal housing headers 15. Each terminal housing header 15 is equipped with a terminal wing 12, also called terminal contact 12 or simply terminal 12, having a hole therein 14 to cooperate with (electric) terminals of a connector to be connected with the terminal 12, in particular high voltage terminals. For sake of clarity, one terminal wing 12 has been hidden.

The terminal assembly 1 is also provided with a thermal sensor system 26 having :
- a flexible thermally conductive component 23,
- a temperature sensor 23c.

The temperature sensor 23c is in contact with, or embedded in, the flexible thermally conductive component 23, which can be a liquid silicone rubber (LSR), for better thermal conductivity and better mechanical behavior.

The thermal sensor system 26 is further provided with a compressing mechanism arranged to compress the flexible thermally conductive component 23 onto the terminal 12 (and/or onto the terminal housing header 15), in order to provide a better thermal path to the temperature sensor 23c and a better mechanical behavior, in particular for vibration resistance.

In other words, the temperature sensor 23c is placed inside an electrical connector with high voltage tab / blades terminals.

The compressing mechanism is formed by a plunger part 21 arranged for being latched in a supporting body 20 of the compressing mechanism. The compressing mechanism presents a longitudinal dimension along the axis XX'.

Thereby the flexible thermally conductive component 23 is compressed onto the terminal 12.

Turning to figure 2, the terminal assembly 1 is represented from the bottom, that is to say, opposite to figure 1. The reference numbers are kept as far as possible for the common parts.

The plunger part 21 has a slope 22s arranged to be introduced in the supporting body 20 and an abutting portion 22a arranged to be engaged with the supporting body 20 in a corresponding portion of the supporting body 20. Thereby, the flexible thermally conductive component 23 can be compressed when the plunger part 21 is latched in the supporting body 20.

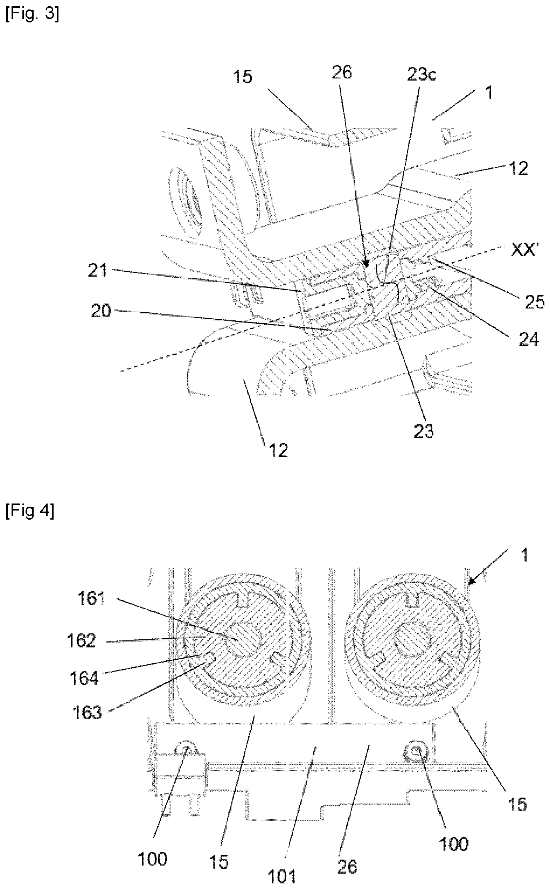

Turning to figure 3, the terminal assembly 1 is represented in a cross section view. The reference numbers are kept as far as possible for the common parts.

The supporting body 20 has a fixing portion 25 (for example a hook portion) arranged to be fixed to an anchoring portion 24 (for example a cylindrical portion) of the terminal 15.

When the plunger part 21 is latched with the supporting body 20, the flexible thermally conductive component 23 is compressed, and in particular is compressed onto the terminal 12, so as to provide a better thermal path and a better mechanical behavior (in particular for vibration resistance). Due to the arrangement of the terminal assembly 1 and the compression of the flexible thermally conductive component 23, more heat travels to the temperature sensor 23 and the heat transfer is faster. In particular, this allows to limit thermal bridge. Further, this allows to have no gap filler in contact with the temperature sensor 23c.

When compressed, the flexible thermally conductive component 23 can extends on both sides (or apart) of the axis XX'.

The terminal assembly 1 has also a printed circuit board electrically connected to the temperature sensor 23c, for retrieving signal from the temperature sensor 23c.

The temperature sensor 23c can be a negative temperature coefficient sensor, a positive temperature coefficient sensor or a resistance temperature detector.

The present disclosure further includes a vehicle including an electric battery.

The electrical connector is thereby provided with a temperature monitoring system for monitoring the temperature of the (power) terminals during charging. The charging power is controlled depending on the temperature of the terminals. In case that an important rise of temperature is detected (i.e., when the temperature exceeds a maximum temperature), the charging power can be reduced or even switched off.

A second embodiment is illustrated with respect to figures 4 to 6.

Figure 4 illustrates the second embodiment of the present disclosure, in top view in perspective.

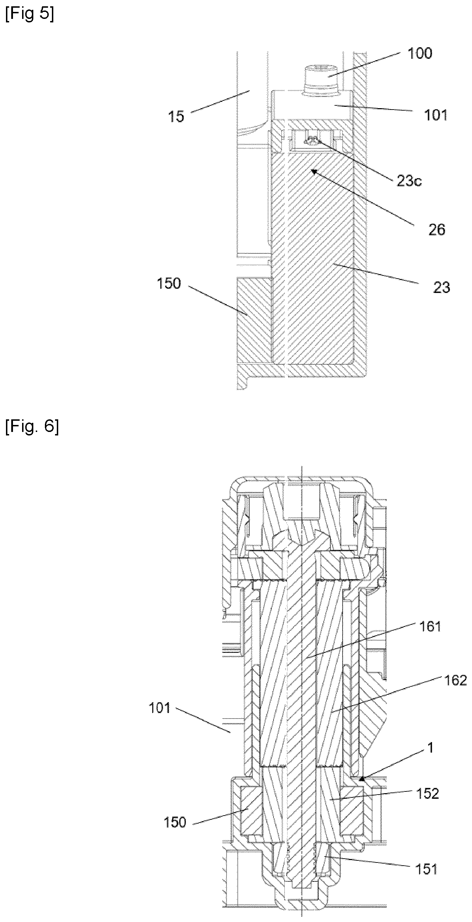

The terminal assembly 1 has two terminal header housings 15. Each terminal header housing 15 is arranged to receive a round bar terminal 162 having slots 164 to cooperate with projections or ribs 163 in order to guide the round bar terminal 162 in the terminal header housing 15. The round bar terminal 162 is arranged to receive therein a connection screw 161 so as to further fix it on the terminal header housing 15, in a corresponding nut 151, as it will be illustrated in figure 6. When the round bar terminal 162 is fully introduced, it is in contact with a mating piece 152 (which is in contact with a bus bar 150). That is, the connection screw 161 also to improve the contact. If the contact force decrease between the round bar terminal 162 and the mating piece 152, this increase the contact resistance and an abnormal increase of the temperature may be detected. That is, this allows to better monitor the quality of the contact and the electrical and heating status. The bus bar 150 and the mating piece 152 are examples of terminal contact or simply terminal.

The terminal assembly 1 further has the thermal sensor system 26 with the compressing mechanism comprising at least one screw 100 and a cover 101.

Figure 5 illustrates the second embodiment in a first cross section view.

The thermal sensor system 26 further has :
- the flexible thermally conductive component 23, and
- the temperature sensor 23c in contact with the flexible thermally conductive component 23. Here the temperature sensor 23c is also in contact with the cover 101.

The compressing mechanism is arranged to compress the flexible thermally conductive component 23, in particular to compress the flexible thermally conductive component 23 onto the bus bar 150.

That is, the screw 100 is arranged to fix the cover 101 onto the flexible thermally conductive component 23, so as to compress the temperature sensor 23c onto the flexible thermally conductive component 23 and/or to compress the flexible thermally conductive component 23 onto the bus bar 150, so as to improve the thermal contact and the performances of the thermal sensor system 26. Further, the flexible thermally conductive component 23 may be in contact with the bus bar 150 so as to further increase the thermal contact. The bus bar 150 may also compress the flexible thermally conductive component 23.

The bus bar 150 may be in aluminum, copper or any suitable material for electrical current carrying capacity, while the terminal may be in copper or any suitable material for electrical current carrying capacity.

The screw(s) 100 is preferably a self-taping screw so as to be fixed inside header housing 15. The screw(s) 100 may provide a stronger and more reliable fixation. The thermal sensor system 26 is arranged between the terminal housing headers 15. Similarly, the thermal sensor system 26 may be arranged between two bus bars 150.

Figure 6 illustrates the second embodiment in second cross section view. The mating piece 152 is arranged to be in contact with the bus bar 150. The connection screw 161 is screwed in the nut 151 so as to ensure a good contact between the round bar terminal 162 and the mating piece 152. The mating piece 152 is also in electric contact with the bus bar 150.

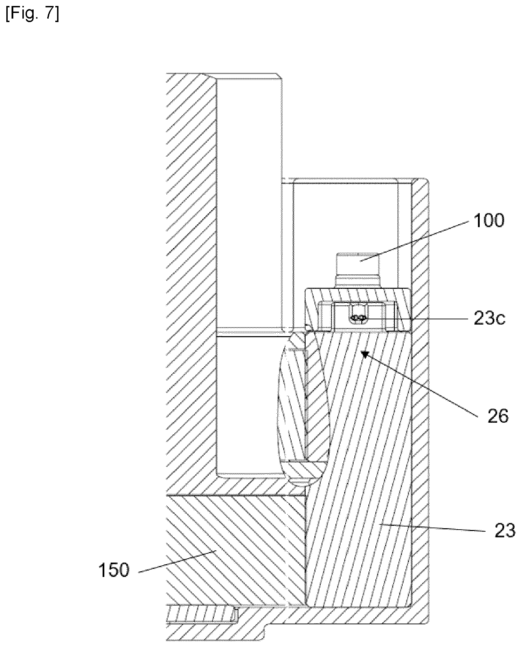

Figure 7 illustrates the second embodiment in a third cross section view.

The flexible thermally conductive component 23 is preferably in a liquid silicone rubber, LSR. Further, the temperature sensor 23c may be selected from the group of a negative temperature coefficient sensor, a positive temperature coefficient sensor or a resistance temperature detector. The temperature sensor 23c may be in contact with or embedded into the flexible thermally conductive component 23.

The bus bar 150 is illustrated in figure 7. The bus bar 150 may compress the flexible thermally conductive component 23. The bus bar 150 is at least in contact with the flexible thermally conductive component 23.

## Claims

1. A terminal assembly (1) having at least one terminal (12, 150) maintained by a terminal housing header (15), and a thermal sensor system (26) having
- a flexible thermally conductive component (23),
- a temperature sensor (23c) in contact with the flexible thermally conductive component (23),
wherein the thermal sensor system (26) further has:
- a compressing mechanism arranged to compress the flexible thermally conductive component (23),
**characterized in that** the compressing mechanism is arranged to compress the flexible thermally conductive component (23) in a compression direction, whereas the flexible thermally conductive component (23) is compressed onto said at least one terminal (12, 150) in a contact direction perpendicular to the compression direction.

2. The terminal assembly (1) according to claim 1, wherein the flexible thermally conductive component (23) is a liquid silicone rubber, LSR.

3. The terminal assembly (1) according to any one of claims 1 to 2, wherein the compressing mechanism has a plunger part (21) arranged for being latched in a supporting body (20) of the compressing mechanism.

4. The terminal assembly (1) according to claim 3, wherein the plunger part (21) has a slope (22s) arranged to be introduced in the supporting body (20) and an abutting portion (22a) arranged to be engaged with the supporting body (20).

5. The terminal assembly (1) according to claim 3 or 4, wherein the supporting body (20) has a fixing portion (25) arranged to be fixed to an anchoring portion (24) of the terminal (12, 150).

6. The terminal assembly (1) according to any one of claims 1 to 5, wherein the temperature sensor (23c) is selected from the group of a negative temperature coefficient sensor, a positive temperature coefficient sensor or a resistance temperature detector.

7. The terminal assembly (1) according to any one of claims 1 to 6, wherein the temperature sensor (23c) is embedded in the flexible thermally conductive component (23).

8. The terminal assembly (1) according to any one of claims 1 to 7, having at least two terminals (12), and wherein the thermal sensor system (26) is arranged between the two terminals (12, 150).

9. The terminal assembly (1) of claim 8, wherein the flexible thermally conductive component (23) is compressed between the two terminals (12, 150).

## Patentansprüche

1. Eine Anschlussanordnung (1) mit mindestens einer Anschlussklemme (12, 150), die von einem Anschlussgehäuse-Grundkörper (15) gehalten wird, und einem Wärmesensorsystem (26), das aufweist: eine flexible wärmeleitfähige Komponente (23), einen Temperatursensor (23c), der mit der flexiblen wärmeleitfähigen Komponente (23) in Kontakt steht, wobei das Wärmesensorsystem (26) ferner aufweist: einen Kompressionsmechanismus, der angeordnet ist, um die flexible wärmeleitfähige Komponente (23) zusammenzudrücken, **dadurch gekennzeichnet, dass** der Kompressionsmechanismus angeordnet ist, um die flexible wärmeleitfähige Komponente (23) in einer Kompressionsrichtung zusammenzudrücken, während die flexible wärmeleitfähige Komponente (23) in einer zur Kompressionsrichtung senkrechten Kontaktrichtung auf die mindestens eine Anschlussklemme (12, 150) komprimiert wird.

2. Anschlussanordnung (1) nach Anspruch 1, wobei die flexible wärmeleitfähige Komponente (23) ein Flüssigsilikonkautschuk, LSR, ist.

3. Anschlussanordnung (1) nach einem der Ansprüche 1 bis 2, wobei der Kompressionsmechanismus ein Stößelteil (21) aufweist, das zur Verrastung in einem Stützkörper (20) des Kompressionsmechanismus angeordnet ist.

4. Anschlussanordnung (1) nach Anspruch 3, wobei das Stößelteil (21) eine Schräge (22s), die zur Einführung in den Stützkörper (20) angeordnet ist, und einen Anlageabschnitt (22a) aufweist, der zum Eingriff mit dem Stützkörper (20) angeordnet ist.

5. Anschlussanordnung (1) nach Anspruch 3 oder 4, wobei der Stützkörper (20) einen Befestigungsabschnitt (25) aufweist, der zur Befestigung an einem Verankerungsabschnitt (24) der Anschlussklemme (12, 150) angeordnet ist.

6. Anschlussanordnung (1) nach einem der Ansprüche 1 bis 5, wobei der Temperatursensor (23c) aus der Gruppe ausgewählt ist, die aus einem Sensor mit negativem Temperaturkoeffizienten, einem Sensor mit positivem Temperaturkoeffizienten oder einem Widerstandstemperaturdetektor besteht.

7. Anschlussanordnung (1) nach einem der Ansprüche 1 bis 6, wobei der Temperatursensor (23c) in die flexible wärmeleitfähige Komponente (23) eingebettet ist.

8. Die Anschlussanordnung (1) nach einem der Ansprüche 1 bis 7, mit mindestens zwei Anschlussklemmen (12), und wobei das Wärmesensorsystem (26) zwischen den beiden Anschlussklemmen (12, 150) angeordnet ist.

9. Anschlussanordnung (1) nach Anspruch 8, wobei die flexible wärmeleitfähige Komponente (23) zwischen den beiden Anschlussklemmen (12, 150) komprimiert ist.

## Revendications

1. Ensemble borne (1) comportant au moins une borne (12, 150) maintenue par une embase de boîtier de borne (15), et un système de capteur thermique (26) comportant : un composant thermiquement conducteur flexible (23), un capteur de température (23c) en contact avec le composant thermiquement conducteur flexible (23), dans lequel le système de capteur thermique (26) comporte en outre : un mécanisme de compression agencé pour comprimer le composant thermiquement conducteur flexible (23), **caractérisé en ce que** le mécanisme de compression est agencé pour comprimer le composant thermiquement conducteur flexible (23) dans une direction de compression, tandis que le composant thermiquement conducteur flexible (23) est comprimé sur ladite au moins une borne (12, 150) dans une direction de contact perpendiculaire à la direction de compression.

2. Ensemble borne (1) selon la revendication 1, dans lequel le composant thermiquement conducteur flexible (23) est un caoutchouc de silicone liquide, LSR.

3. Ensemble borne (1) selon l'une quelconque des revendications 1 à 2, dans lequel le mécanisme de compression a une partie de piston (21) agencée pour être encliquetée dans un corps de support (20) du mécanisme de compression.

4. Ensemble borne (1) selon la revendication 3, dans lequel la partie de piston (21) a une pente (22s) agencée pour être introduite dans le corps de support (20) et une portion de butée (22a) agencée pour venir en prise avec le corps de support (20).

5. Ensemble borne (1) selon la revendication 3 ou 4, dans lequel le corps de support (20) a une portion de fixation (25) agencée pour être fixée à une portion d'ancrage (24) de la borne (12, 150).

6. Ensemble borne (1) selon l'une quelconque des revendications 1 à 5, dans lequel le capteur de température (23c) est sélectionné dans le groupe constitué d'un capteur à coefficient de température négatif, d'un capteur à coefficient de température positif ou d'un détecteur de température à résistance.

7. Ensemble borne (1) selon l'une quelconque des revendications 1 à 6, dans lequel le capteur de température (23c) est intégré dans le composant thermiquement conducteur flexible (23).

8. Ensemble borne (1) selon l'une quelconque des revendications 1 à 7, comportant au moins deux bornes (12), et dans lequel le système de capteur thermique (26) est agencé entre les deux bornes (12, 150).

9. Ensemble borne (1) selon la revendication 8, dans lequel le composant thermiquement conducteur flexible (23) est comprimé entre les deux bornes (12, 150).
